# EUROPÄISCHE PATENTSCHRIFT

(11) **EP 0 722 154 B1**
(45) Veröffentlichungstag und Bekanntmachung des Hinweises auf die Patenterteilung: **08.06.2005**
(21) Anmeldenummer: 95117137.0
(22) Anmeldetag: 31.10.1995
(51) Int. Cl.: G07F 17/16, G07F 7/08

(54) **Verfahren zum Verkaufen von Datensätzen sowie Verkaufsautomat und Verkaufs-System für Telekommunikations-Software**
Method for selling data sets; vending machine and system for selling telecommunication software
Méthode de vente de jeux de données, machine de vente et système pour la vente de logiciels de télécommunication

(30) Priorität: 22.12.1994 DE 4445847
(43) Veröffentlichungstag der Anmeldung: 17.07.1996
(73) Patentinhaber: Alcatel SEL Aktiengesellschaft, 70435 Stuttgart (DE); ALCATEL, 75008 Paris (FR)
(72) Erfinder: Kopp, Dieter, D-71282 Hemmingen (DE)
(74) Vertreter: Brose, Gerhard, Dipl.-Ing.

(56) Entgegenhaltungen:
- EP-A- 0 191 162
- EP-A- 0 409 701
- EP-A- 0 535 630
- DE-A- 4 339 438
- DE-U- 9 401 027
- US-A- 4 740 890
- PATENT ABSTRACTS OF JAPAN vol. 017, no. 435 (P-1590), 11.August 1993 & JP 05 089360 A (NATSUKUSU:KK), 9.April 1993,

## Beschreibung

Die Erfindung betrifft ein Verfahren zum Verkaufen von Datensätzen mittels eines Verkaufsautomaten, einen Verkaufsautomaten und ein Verkaufssystem für Telekommunikations-Software.

Die Erfindung geht von mehreren bekannten Verkaufsverfahren für Software aus.

Im Regelfall werden Software-Programme vom Anwender dadurch erworben, daß er einen Datenträger mit dem darauf abgespeicherten Software-Programm in einem Geschäft erwirbt.

Dieses Verfahren hat den Nachteil, daß der Käufer neben dem Software-Programm einen Datenträger miterwirbt und u.U. für den Kauf viel Zeit aufwenden muß.

Weiter sind Verkaufs-Systeme für Software bekannt, bei denen Software-Programme auf elektronischem Wege an die Käufer versendet werden.

Solch ein Verkaufs-System ist beispielsweise in dem Artikel "How Much is That Object In The Window?" auf der Seite 54 der Zeitschrift "Business Week", 22. August, 1994 beschrieben. Bei diesem Verkaufs-System werden Software-Programme verschiedener Hersteller über ein elektronisches Kommunikationssystem den Käufern angeboten und können von diesen über dieses System erworben werden. Ein Nachteil eines solchen Systems besteht darin, daß der Käufer über ein geeignetes Endgerät für dieses elektronische Kommunikationssystem verfügen muß.

Die Erfindung geht weiter von einem Verkaufsautomaten für Software aus, wie er in dem Deutschen Gebrauchsmuster G 94 01 027 beschrieben ist.

Dieser Verkaufsautomat dient dem Verkauf von Public-Domain- oder Shareware-Software-Programmen. Er weist ein Festplatten- oder CD-ROM-Laufwerk, ein Diskettenlaufwerk, eine vereinfachte Tastatur und eine Einrichtung zum Münzprüfen auf. Über die Tastatur wird ein Software-Programm ausgewählt und von dem Festplatten- oder CD-ROM Laufwerk auf eine vom Erwerber in das Diskettenlaufwerk eingeführte Diskette kopiert, wenn der Münzprüfer den Einwurf eines bestimmten Geldbetrages festgestellt hat.

EP535630 beschreibt einen Verkaufsautomat, der über eine Speichereinrichtung verfügt, in der über Satellit empfangene Informationen abgespeichert werden. Diese Informationen werden von Zeitungs- und Magazininhalten gebildet. In der Speichereinrichtung abgespeicherte Informationen werden nach Einwerfen eines Geldbetrages in den Verkaufsautomaten auf eine Speicherkarte abgespeichert.

US4740890 beschreibt eine Methode, die es einem Kunden ermöglicht, ein Programm mehrmals kostenlos zu testen, bevor er es kauft. Disketten mit dem darauf abgespeicherten Programm werden an Kunden verschickt. Auf der Diskette ist ein Zähler abgespeichert, der bei jedem Gebrauch der Diskette dekrementiert wird. Ist der Zähler bei 0 angekommen, muß die Diskette durch einen speziellen Code entblockt werden. Ansonsten kann das Programm nicht mehr ausgeführt werden. Diesen Code erhält der Kunde beim Verkäufer gegen Bezahlung des Kaufpreises.

Der Erfindung liegt die Aufgabe zugrunde, Datensätze entgeltlich bereitzustellen.

Die Aufgabe wird gelöst durch ein Verfahren nach der Lehre von Anspruch 1 sowie durch einen Verkaufsautomaten nach Anspruch 8 und ein Verkaufssystem nach der Lehre von Anspruch 10.

Der Grundgedanke der Erfindung ist, einen Datensatz derart von einem Verkaufsautomaten auf eine geeignete Speichereinrichtung abzuspeichern, daß der abgespeicherte Datensatz nur in einem vorbestimmten Umfang für den Gebrauch freigegeben wird. Der Käufer erwirbt so nicht mehr einen Datenträger mit einer physikalischen Kopie des Datensatzes sondern einen Datensatz mit einer vorgegebenen, begrenzten Gebrauchsmöglichkeit.

Unter einem Datensatz sind hierbei Software-Programme oder Daten für Software-Programme wie beispielsweise elektronische Lexika, aber auch Video-, Audio-Aufzeichnungen usw. zu verstehen.

Erfindungsgemäße Ausgestaltungen sind den Unteransprüchen zu entnehmen.

Die Erfindung hat den Vorteil, daß die mit ihr verkauften Datensätze zu einem verbrauchbaren Gut werden. So ist es möglich, daß ein Erwerber den von ihm gewünschten Gebrauchsumfang spezifiziert, nur für diesen zahlt und dann einen nur für diesen Gebrauchsumfang freigegebenen Datensatz erhält.

Vorteilhaft ist hierbei auch, daß durch die Verwendung eines Verkaufsautomaten der Gebrauchsumfang käuferindividuell festgelegt werden kann und Manipulationen des Käufers während des Abspeicherungsvorgangs unterbunden werden können.

Weitere Vorteile sind, daß der Käufer keinen Datenträger miterwerben muß und er Datensätze in einer von ihm gewählten Zusammenstellung auf einer Speichereinrichtung erwerben kann.

Weitere Vorteile ergeben sich bei der Verwendung von zentralen Datenbanken, die mit Verkaufsautomaten über Breitband-Kommunikationswege verbunden sind. Hierdurch steht eine große Auswahl an Datensätzen bereit und die teuren Breitband-Kommunikationswege werden gut ausgenutzt, da eine Vielzahl von Käufern auf jeden Verkaufsautomaten zugreift.

Im folgenden wird die Erfindung anhand eines Ausführungsbeispiels und vier Anwendungsbeispielen unter Zuhilfenahme beiliegender Zeichnungen weiter erläutert.
- Fig. 1: zeigt ein Blockschaltbild eines erfindungsgemäßen Verkaufsautomaten.
- Fig. 2: zeigt ein Blockschaltbild einer Speichereinrichtung für die Verwendung mit einem erfindungsgemäßen Verkaufsautomaten nach Fig. 1.

Im Ausführungsbeispiel wird ein erfindungsgemäßes Verkaufssystem für Telekommunikations-Software mit erfindungsgemäßen Verkaufsautomaten und mit Chip-Karten, die mit Speichereinrichtungen versehen sind, beschrieben, in dem das erfindungsgemäße Verfahren durchgeführt wird.

Das Verkaufssystem weist eine Vielzahl von Verkaufsautomaten, eine Vielzahl von Chip-Karten und eine Vielzahl von Telekommunikations-Einrichtungen auf.

Die Telekommunikationseinrichtungen sind Telekommunikations-Endgeräte und Nebenstellen-Vermittlungen. Die zu deren Betrieb notwendigen Software-Programme sind jeweils ganz oder teilweise auf einer Chip-Karte abgespeichert, die somit jeweils deren Leistungsmerkmale bestimmt.

Die Verkaufsautomaten sind an viel besuchten Orten aufgestellt, beispielsweise Tankstellen. Mittels dieser Verkaufsautomaten ist es möglich, die Software-Programme für die Telekommunikations-Einrichtungen zu erwerben.

In den Verkaufsautomaten wird die gewünschte Programm-Zusammenstellung sowie der gewünschte Nutzungsumfang der Programme eingegeben. Der Verkaufsautomat berechnet sodann den dafür zu zahlenden Geldbetrag und speichert die gewünschten Software-Programme nach Bezahlung auf einer mitgebrachten Chip-Karte ab. Die Chip-Karte wird sodann in die Telekommunikations-Einrichtung eingeführt, die sodann über die gewünschten Leistungsmerkmale verfügt.

Anstelle von Telekommunikations-Software können auch andere Software-Programme mittels der Erfindung verkauft werden.

Im folgenden wird nun die Funktionsweise eines solchen Verkaufsautomatenen beispielhaft an einem Verkaufsautomaten AUT erläutert.

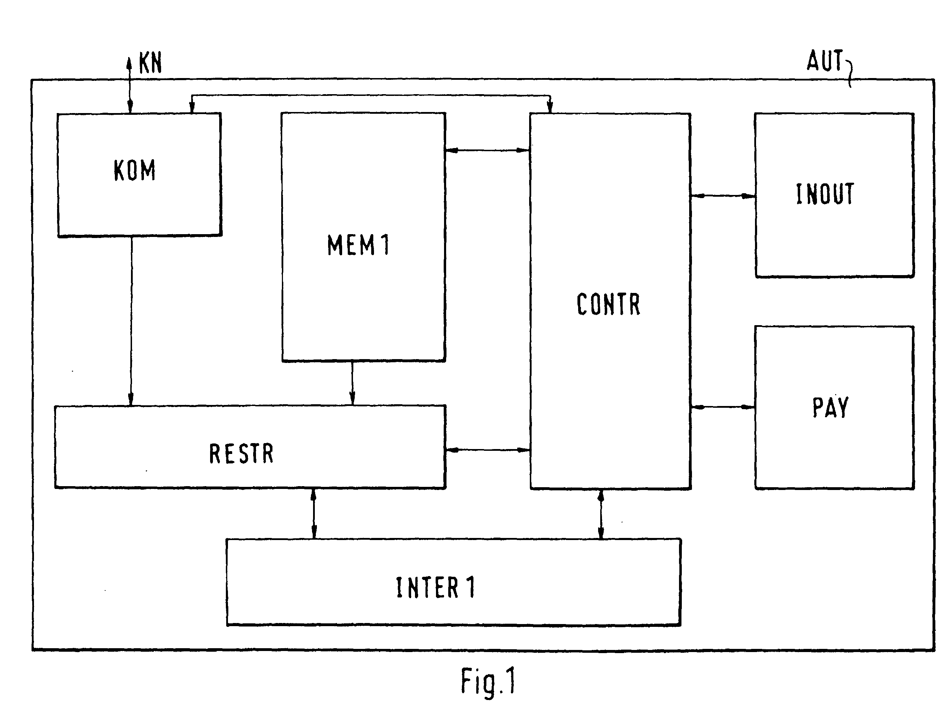

Fig. 1 zeigt den Verkaufsautomat AUT mit der Kommunikationseinrichtung KOM, der Speichereinrichtung MEM1, der Steuereinrichtung CONTR, der Bedieneinrichtung INOUT, der Zahleinrichtung PAY, der Schnittstelleneinrichtung INTER1 und der Einrichtung zur Gebrauchsbeschränkung RESTR.

Die Kommunikationseinrichtung KOM tauscht Daten über ein Kommunikationsnetz KN aus. Die Einrichtung zur Gebrauchsbeschränkung RESTR empfängt Daten von der Kommunikationseinrichtung KOM und von der Speichereinrichtung MEM1 und tauscht Daten mit der Schnittstelleneinrichtung INTR1 aus. Die Steuereinrichtung CONTR tauscht Steuerdaten mit der Einrichtung RESTR, der Kommunikationseinrichtung KOM, der Speichereinrichtung MEM1, der Bedieneinrichtung INOUT, der Zahleinrichtung PAY und der Schnittstelleneinrichtung INTER1 aus.

Die Speichereinrichtung MEM1 besteht aus einem Massenspeicher, beispielsweise einem oder mehreren Festplatten- oder CD-ROM-Laufwerken. In der Speichereinrichtung MEM1 sind eine Vielzahl von Datensätzen abgespeichert, wobei jeder Datensatz von einem Software-Programm gebildet wird.

Die Kommunikationseinrichtung KOM stellt die notwendigen Kommunikationsdienste zur Kommunikation über das Kommunikationsnetz KN sowie den passenden Netzanschluß zur Verfügung. Mittels der Kommunikationseinrichtung KOM ist es möglich, Datensätze von einer weit entfernten Speichereinrichtung, beispielsweise einer zentralen Datenbank, anzufordern und zu empfangen.

Es ist auch möglich, entweder auf die Speichereinrichtung MEM1 oder auf die Kommunikationseinrichtung KOM zu verzichten und so die Datensätze zentral bzw. dezentral oder lokal zu halten.

Die Bedieneinrichtung INOUT dient der Mensch-Maschine-Kommunikation. Sie wird beispielsweise von einem Bildschirm und einer Tastatur gebildet.

Die Zahleinrichtung PAY ermöglicht und überprüft die Einzahlung eines bestimmten Geldbetrages. Sie verfügt über entsprechende mechanische Einrichtungen, in die Geldscheine oder Münzen eingeführt, gezählt und auf ihre Echtheit geprüft werden. Ist einer von der Steuereinrichtung CONTR bestimmter Geldbetrag einbezahlt worden, so sendet die Zahleinrichtung PAY ein entsprechendes Freigabesignal an die Steuereinrichtung CONTR.

Es ist auch möglich, daß die Zahleinrichtung PAY ausschließlich oder zusätzlich über Einrichtungen für den bargeldlosen Zahlungsverkehr verfügt. Mittels dieser Einrichtungen ist es möglich, einen von der Steuereinrichtung CONTR bestimmten Geldbetrag direkt von einem Konto bei einem Bank- oder Kreditkarten-Institut abzubuchen. Das Freigabesignal würde in diesem Fall dann an die Steuereinrichtung CONTR gegeben, wenn die Abbuchung von dem entsprechenden Institut freigegeben worden ist oder auf eine andere Art authorisiert worden ist.

Die Schnittstelleneinrichtung INTER1 dient zum Ankoppeln von Chip-Karten. Wird eine geeignete Chip-Karte in die Schnittstelleneinrichtung INTER1 eingeführt, so stellt die Schnittstelleneinrichtung INTER1 über entsprechend angeordnete Kontakte die erforderlichen galvanischen Verbindungen zu der Chip-Karte her. Es ist auch möglich, daß die Verbindung zwischen der Schnittstelleneinrichtung INTER1 und der Chip-Karte nicht über Kontakte hergestellt wird, sondern berührungslos erfolgt. Die Verbindung könnte hierzu beispielsweise optisch oder induktiv hergestellt werden. Ist die Verkopplung gelungen, d.h. eine Datenübertragung zwischen Chip-Karte und Schnittstelleneinrichtung möglich, wird ein Freigabesignal an die Steuereinrichtung CONTR gegeben.

Es ist auch möglich, daß nicht Chip-Karten, sondern auf anderen Trägern aufgebrachte Speichereinrichtungen oder auch Datenträger mit der Schnittstelleneinrichtung INTER1 verkoppelt werden. Solche Speichereinrichtungen könnten beispielsweise Speicherkarten nach dem PCMCIA-Standard (PCMCIA = Personal Computer Memory Card International Association) sein. Weiter könnte die Schnittstelleneinrichtung INTER1 auch direkt mit einer auf einer Telekommunikations-Einrichtung angeordneten Speichereinrichtung verkoppelt werden. Die Schnittstelleneinrichtung INTER1 wäre so gegebenenfalls mit entsprechenden Schreib- und Leseeinrichtungen ausgestattet oder eine Verbindung würde über ein Verbindungskabel hergestellt werden.

Die Einrichtung zur Gebrauchsbeschränkung RESTR empfängt Datensätze von der Kommunikationseinrichtung KOM oder von der Speichereinrichtung MEM1 und speichert sie auf ein Steuersignal von der Steuereinrichtung CONTR über die Schnittstelleneinrichtung INTER1 auf der Chip-Karte ab. Der Abspeicherungsvorgang ist hierbei derart gestaltet, daß der abgespeicherte Datensatz beim späteren Gebrauch nur in einem vorgegebenen Umfang freigegeben wird. Die Gebrauchsbeschränkung besteht hierbei darin, das Kopieren des Datensatzes von der Chip-Karte auf eine weitere Chip-Karte zu behindern und gegebenenfalls den Nutzungsumfang des Datensatzes zu beschränken.

Zuerst überprüft die Einrichtung RESTR mittels eines Identifizierungsprotokolls, ob eine geeignete Chip-Karte, die das von der Einrichtung RESTR durchgeführte Verfahren zur Gebrauchsbeschränkung unterstützt, an die Schnittstelleneinrichtung INTER1 angekoppelt ist. Es ist auch möglich, daß auf diese Überprüfung verzichtet wird oder daß die Schnittstelleneinrichtung INTER1 so ausgestaltet ist, daß nur solche geeigneten Chip-Karten angekoppelt werden können.

Als nächstes werden in dem an die Chip-Karte zu sendenden Datensatz Daten über den Nutzungsumfang des Datensatzes vermerkt. Diese Daten enthalten Angaben über die Anzahl der möglichen Verwendung des Datensatzes, die zeitliche Dauer, über die der Datensatz verwendet werden kann, oder eine Zeitangabe, bis zu der der Datensatz verwendet werden darf. Auch eine Gruppe von Telekommunikations-Einrichtungen, für die der Datensatz verwendet werden darf, kann spezifiziert werden.

Der so abgeänderte Datensatz wird sodann über die Schnittstelleneinrichtung INTER1 an die Chip-Karte gesendet, die ihn dann in einer Speichereinrichtung abspeichert.

Es ist auch möglich, daß die Daten über den Nutzungsumfang nicht in den Datensatz vermerkt werden, sondern als separate Daten an die Chip-Karte gesendet und in dieser separat abgespeichert werden.

Weiter ist es möglich, daß in dem Datensatz Daten über die Identität des Käufers eines Datensatzes vermerkt werden. Solche Daten können beispielsweise aus dem Namen und der Adresse des Käufers oder aus einer diesem zugeordneten persönlichen Nummer bestehen. Diese Daten würden von der Bedieneinrichtung INOUT erfaßt oder auch von der Zahleinrichtung PAY bereitgestellt werden.

Es wäre auch möglich, daß der Datensatz von der Einrichtung RESTR in einer speziell kodierten Form auf der Chip-Karte abgespeichert würde und so nur von speziellen Lesegeräten wieder ausgelesen werden könnte.

Die Steuereinrichtung CONTR steuert den Ablauf des Verkaufsverfahrens und die Koordination zwischen den verschiedenen Einrichtungen des Verkaufsautomaten AUT.

Über die Bedieneinrichtung INOUT stellt die Steuereinrichtung CONTR den Käufern eine Übersicht über die in der Speichereinrichtung MEM1 abgelegten und über die Kommunikationseinrichtung KOM verfügbaren Datensätze bereit. Aus dieser Auswahl kann der Käufer sodann eine beliebige Auswahl treffen und für jeden Datensatz einen beliebigen Nutzungsumfang festlegen. Hat der Käufer seine Auswahl beendet, so berechnet die Steuereinrichtung CONTR den dafür zu zahlenden Betrag und zeigt ihn über die Bedieneinrichtung INOUT dem Käufer an. Daneben sendet die Steuereinrichtung CONTR an die Zahleinrichtung PAY Steuerdaten, mit denen sie ihr den zu zahlenden Geldbetrag mitteilt und sie auffordert, den Geldbetrag einzuziehen. Nachdem der zu zahlende Geldbetrag in die Zahleinrichtung PAY eingezahlt worden ist, gibt diese ein Freigabesignal an die Steuereinrichtung CONTR. Liegt ebenfalls ein Freigabesignal von der Schnittstelleneinrichtung INTER1 vor, so sendet die Steuereinrichtung CONTR an die Kommunikationseinrichtung KOM oder an die Speichereinrichtung MEM1 Steuersignale, auf die diese die ausgewählten Datensätze an die Einrichtung RESTR sendet. Daneben sendet die Steuereinrichtung CONTR die Daten über den gewünschten Nutzungsumfang der Datensätze an die Einrichtung RESTR und veranlaßt diese, den Abspeicherungsvorgang zu beginnen.

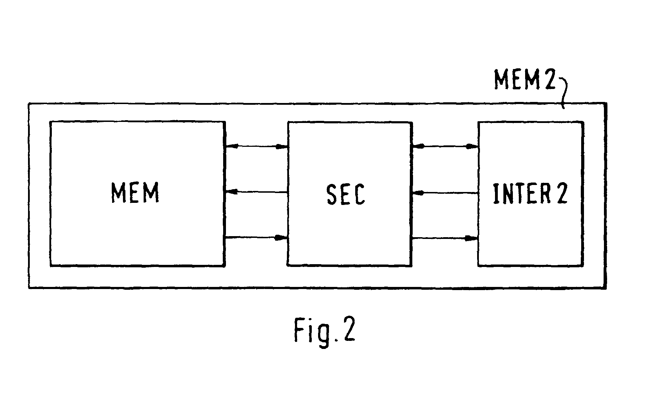

Anhand von Fig. 2 wird nun der Aufbau und die Funktionsweise einer Chip-Karte beispielshaft erläutert.

Fig. 2 zeigt eine Speichereinrichtung MEM2, die in einer Chip-Karte eingebettet ist. Die Speichereinrichtung weist einen Speicher MEM, eine Sicherungseinrichtung SEC und eine Schnittstelleneinrichtung INTER2 auf. Die Sicherungseinrichtung SEC tauscht mit dem Speicher MEM und mit der Schnittstelleneinrichtung INTER2 Daten und Steuersignale aus.

Die Speichereinrichtung MEM wird von einem Speicherchip gebildet. Auch ein sonstiges Speichermedium wäre verwendbar.

Die Schnittstelleneinrichtung INTER2 ermöglicht ein für die Datenübertragung geeignetes Ankoppeln der Chip-Karte an Verkaufsautomaten und Telekommunikations-Einrichtungen. Hierfür weist die Schnittstelleneinrichtung INTER2 entsprechende Kontakte auf, deren Anordnung zu denen der Schnittstelleneinrichtung INTER1 und zu denen der dafür vorgesehenen Schnittstelleneinrichtungen der Telekommunikations-Einrichtungen passen.

Es ist auch möglich, daß für die Verkaufsautomaten und für die Telekommunikations-Einrichtungen unterschiedliche Kontakte vorgesehen sind.

Die Sicherungseinrichtung SEC überwacht das Einschreiben und Auslesen von Daten in den bzw. aus dem Speicher MEM. Weiter tauscht sie über die Schnittstelleneinrichtung INTER2 Steuerdaten mit derjenigen Einrichtung aus, mit der sie über die Schnittstelleneinrichtung INTER2 verbunden ist.

Auf eine entsprechende Anforderung von dieser Einrichtung identifiziert sie sich mittels des Identifizierungs-Protokolls. Dies ermöglicht es den Verkaufsautomaten sicherzustellen, daß sie Datensätze nur auf Chip-Karten abspeichern, die das Verfahren zur Gebrauchsbeschränkung unterstützen. Auch eine Identifizierung durch die Telekommunikations-Einrichtungen wäre möglich und als weiterer Schutz vorteilhaft.

Es ist auch möglich, daß die Sicherungseinrichtung SEC zusätzlich die Identität einer Einrichtung, die das Einschreiben von Datensätzen anfordert, mittels des Identifizierungsprotokolls bestimmt und dies nur den Verkaufsautomaten gestattet.

Bevor die Sicherungseinrichtung SEC auf eine Anforderung einen Datensatz aus dem Speicher MEM ausliest und über die Schnittstelleneinrichtung INTER2 ausgibt, überprüft sie mittels des Identifizierungs-Protokolls die Identität der anfordernden Einrichtung. Hierdurch wird sichergestellt, daß nur geeignete Telekommunikations-Einrichtungen Datensätze auslesen können. Auf diese Identifizierung könnte auch verzichtet werden.

Bevor die Sicherungseinrichtung SEC das Auslesen eines Datensatzes gestattet, überprüft sie weiter die in dem Datensatz vermerkten Daten über den Nutzungsumfang des Datensatzes. Wird der Nutzungsumfang eines Datensatzes überschritten, so läßt sie kein Auslesen des Datensatzes zu. Wird eine zeitliche Überschreitung der Nutzung festgestellt, ist es vorteilhaft den Datensatz sofort aus dem Speicher MEM zu löschen.

Es ist auch möglich, daß die Speichereinrichtung MEM nicht über die Sicherungseinrichtung SEC verfügt. Die Daten über den Nutzungsumfang würden dann mit dem Datensatz in die Anwendungseinrichtung kopiert und von dieser auf ihre Einhaltung überprüft. Dies ist insbesondere dann möglich, wenn die Datensätze nur von ganz bestimmen Telekommunikations-Einrichtungen ausgelesen werden können.

In einem ersten Anwendungsbeispiel wird die Verwendung der Erfindung für den Verkauf von solchen Datensätzen beschrieben, deren Inhalt Text- oder Bildinformationen entspricht, beispielsweise elektronische Zeitschriften, Bücher oder Landkarten.

Die dafür notwendigen Verkaufsautomaten und Speichereinrichtungen sind wie nach Fig. 1 bzw. Fig. 2 ausgestaltet. Als Anwendungsgeräte werden Computer oder Abspielgeräte verwendet, die diese abgespeicherten Informationen aus den Speichereinrichtungen auslesen und darstellen können.

Beispielsweise ist es dann mittels der Verkaufsautomaten möglich, einen ausgewählten Satz von elektronischen Karten oder Zeitschriften für die Dauer einer Urlaubsreise zu erwerben.

Ein zweites Anwendungsbeispiel stellt der Verkauf oder das zeitlich befristete, entgeltliche Bereitstellen von Videofilmen oder Audioaufzeichnungen dar. Vorteilhaft ist hierbei insbesondere, daß durch die Erfindung das Zurückbringen eines entgeltlich ausgeliehenen Videofilms entfällt.

Ein drittes Anwendungsbeispiel stellt der Verkauf eines käuferindividuell zusammengestellten Programm-Paketes dar. Der Käufer wählt die von ihm benötigten Programme, beispielsweise ein Betriebssystem und Programme für die Büro-Organisation am Verkaufsautomaten aus. Die Programme werden anschließend vom Verkaufsautomaten bereits konfiguriert auf eine Speicherkarte abgespeichert. Durch Einstecken der Speicherkarte in einen entsprechend ausgestalteten Computer steht dieses Programm-Paket sodann betriebsbereit für diesen Computer bereit. Das Programm-Paket ist hierbei derart in der Speicherkarte abgespeichert, daß die Ausführung der Programme des Programm-Paketes möglich ist, ein Kopieren der Programme jedoch unterbunden wird. Das Unterbinden des Kopierens wird beispielsweise durch Verfahren wie nach Fig. 1 und Fig. 2 oder durch eine entsprechende Konfigurierung der Programme erreicht.

Ein viertes Anwendungsbeispiel stellt der Verkauf oder das zeitlich befristete, entgeltliche Bereitstellen von Spiel-Programmen für Computer oder speziell ausgestalteten Spielautomaten dar.

## Patentansprüche

1. Verfahren zum Verkaufen von Datensätzen für Telekommunikations-Einrichtungen mittels eines Verkaufsautomaten (AUT), wobei überprüft wird, ob eine geeignete Speichereinrichtung (MEM2) mit einer Schnittstelleneinrichtung (INTER1) des Verkaufsautomaten (AUT) derart verkoppelt worden ist, daß eine Datenübertragung möglich ist, wobei überprüft wird, ob eine Zahleinrichtung (PAY) ein Freigabesignal an eine Steuereinrichtung (CONTR) sendet und bei dem beim Zutreffen dieser beiden Bedingungen mindestens ein zu verkaufender Datensatz auf die Speichereinrichtung (MEM2) abgespeichert wird, **dadurch gekennzeichnet, daß** der Datensatz derart abgespeichert wird, daß der Datensatz nur in einem vorbestimmten Umfang für den Gebrauch freigegeben wird,wobei vor dem Abspeichern Daten über diesen Nutzungsumfang in dem Datensatz vor einer Einrichtung zur Gebrauchsbeschränkung (RESTR) vermerkt werden und der
erwünschte Nutzungsumfang von einer Eingabeeinrichtung (INOUT) erfaßt wird und daß die Zahleinrichtung (PAY) entsprechend dem erwünschten Nutzungsumfang einen zu zahlenden Geldbetrag berechnet.

2. Verfahren nach Anspruch 1,
wobei das Kopieren des Datensatzes von der Speichereinrichtung (MEM2) auf eine weitere Speichereinrichtung behindert wird.

3. Verfahren nach Anspruch 2,
wobei es sich bei dem Datensatz um ein Programm handelt und der Datensatz derart auf der Speichereinrichtung (MEM2) abgespeichert wird, daß die Speichereinrichtung (MEM2) die Ausführung des Programms in einer Telekommunikations-Einrichtung, aber kein sonstiges Auslesen des Datensatzes gestattet.

4. Verfahren nach Anspruch 1,
wobei von einer Eingabeeinrichtung (INOUT) Daten über die Identität des Käufers eines Datensatzes erfaßt werden, wobei diese Daten beim Abspeichern in dem Datensatz vermerkt werden, und wobei eine Telekommunikations-Einrichtung bei der Bearbeitung des Datensatzes diese Daten anzeigt oder überprüft.

5. Verfahren nach Anspruch 1,
wobei die Speichereinrichtung (MEM2) die Identität einer Telekommunikations-Einrichtung überprüft und das Auslesen eines Datensatzes nur bestimmten Telekommunikations-Einrichtungen gestattet.

6. Verfahren nach Anspruch 1,
wobei der Verkaufsautomat (AUT) die Identität der Speichereinrichtung (MEM2) überprüft und den Datensatz nur auf bestimmte Speichereinrichtungen (MEM2) abspeichert.

7. Verfahren nach Anspruch 1,
wobei mittels einer Eingabeeinrichtung (INOUT) eine Auswahl aus einer Vielzahl von Datensätzen getroffen wird und die ausgewählten Datensätze auf derselben Speichereinrichtung (MEM2) abgespeichert werden.

8. Verkaufsautomat (AUT) für den Verkauf von Datensätzen für Telekommunikations-Einrichtungen, der mit einer Zahleinrichtung (PAY), mit einer Steuereinrichtung (CONTR), mit einer Einrichtung zur Gebrauchsbeschränkung (RESTR) und mit einer Schnittstelleneinrichtung (INTER1) zum Ankoppeln von Speichereinrichtungen (MEM2) versehen ist, die so ausgestaltet ist, daß sie ein Freigabesignal an die Steuereinrichtung (CONTR) sendet, wenn mit ihr eine geeignete Speichereinrichtung (MEM2) derart verkoppelt worden ist, daß eine Datenübertragung möglich ist, wobei die Einrichtung zur Gebrauchsbeschränkung (RESTR) so ausgestaltet ist, daß sie eine einen abgespeicherten Datensatz nur in einem vorbestimmten Umfang freigebende Abspeicherung von Datensätzen auf der Speichereinrichtung (MEM2) veranlaßt, wobei Daten über diesen Nutzungsumfang in dem Datensatz vermerkt sind, und die Steuereinrichtung (CONTR) so ausgestaltet ist, daß sie das Senden von mindestens einem zu verkaufenden Datensatz an die Einrichtung zur Gebrauchsbeschränkung (RESTR) veranlaßt, wenn sie ein Freigabesignal von der Zahleinrichtung (PAY) und der Schnittstelleneinrichtung (INTER1) empfängt, wobei der erwünschte Nutzungsumfang von einer Eingabeeinrichtung (INOUT) erfasst ist, und die Zahleinrichtung (PAY) entsprechend dem erwünschten Nutzungsumfang einen zu zahlenden Geldbetrag berechnet.

9. Verkaufsautomat (AUT) nach Anspruch 8,
wobei der Verkaufsautomat (AUT) mit einer Kommunikationseinrichtung (KOM) versehen ist, die zum Empfang von Datensätzen über ein Breitband-Kommunikationsnetz (KN) geeignet ist.

10. Verkaufssystem für Telekommunikations-Software, mit einer Vielzahl von Chip-Karten, die jeweils mit einer Speichereinrichtung (MEM2) versehen sind, mit einer Vielzahl von Verkaufsautomaten (AUT) zum Abspeichern von Programmen auf den Chip-Karten und mit einer Vielzahl von Telekommunikations-Einrichtungen, die jeweils mit einer Schnittstelleneinrichtung zum Ankoppeln der Chip-Karten versehen sind und so ausgestaltet sind, daß sie gemäß auf einer angekoppelten Chip-Karte abgespeicherten Programmen gesteuert werden, wobei die Verkaufsautomaten (AUT) jeweils mit einer Zahleinrichtung (PAY), mit einer Steuereinrichtung (CONTR), mit einer Einrichtung zur Gebrauchsbeschränkung (RESTR) und mit einer Schnittstelleneinrichtung (INTER1) zum Ankoppeln der Chip-Karten versehen sind, die so ausgestaltet ist, daß sie ein Freigabesignal an die Steuereinrichtung (CONTR) sendet, wenn mit ihr eine geeignete Chip-Karte derart verkoppelt worden ist, daß eine Datenübertragung möglich ist, wobei die Einrichtung zur Gebrauchsbeschränkung (RESTR) so ausgestaltet ist, daß sie eine einen abgespeicherten Datensatz nur in einem vorbestimmten Umfang freigebende Abspeicherung von Datensätzen auf der Chip-Karte veranlasst, in dem sie Daten über diesen Nutzungsumfang in den Datensatz vermerkt und der erwünschte Nutzungsumfang von einer Eingabeeinrichtung (INOUT)erfasst wird und die Zahleinrichtung (PAY) entsprechend dem erwünschten Nutzungsumfang einen zu zahlenden Geldbetrag berechnet, und die Steuereinrichtung (CONTR) so ausgestaltet ist, daß sie das Senden von mindestens einem zu verkaufenden Datensatz an die Einrichtung zur Gebrauchsbeschränkung (RESTR) veranlaßt, wenn sie ein Freigabesignal von der Zahleinrichtung (PAY) und der Schnittstelleneinrichtung (INTER1) empfängt.

## Claims

1. Method for selling data sets for telecommunication facilities by means of a vending machine (AUT), it being checked whether a suitable storage means (MEM2) has been linked with an interface facility (INTER1) of the vending machine (AUT) in such a way that a data transfer is possible, it being checked whether a payment facility (PAY) sends a release signal to a control facility (CONTR), and in which when these two conditions are met at least one data set for sale is stored on the storage means (MEM2), **characterized in that** the data set is stored in such a way that the data set is released for use to a predetermined extent only, data about this extent of use being recorded in the data set by a usage restriction facility (RESTR) before the storage and the desired scope of use being acquired by an input device (INOUT), and that the payment facility (PAY) calculates a sum of money to be paid according to the desired scope of use.

2. Method according to Claim 1, the copying of the data set from the storage means (MEM2) to a further storage means being prevented.

3. Method according to Claim 2, the data set being a program and the data set being stored on the storage means (MEM2) in such a way that the storage means (MEM2) permits execution of the program in a telecommunication facility, but no other reading of the data set.

4. Method according to Claim 1, data about the identity of the purchaser of a data set being acquired by an input device (INOUT), this data being recorded in the data set as it is stored, and a telecommunication facility displaying or checking this data as the data set is edited.

5. Method according to Claim 1, the storage means (MEM2) checking the identity of a telecommunication facility and permitting only certain telecommunication facilities to read a data set.

6. Method according to Claim 1, the vending machine (AUT) checking the identity of the storage means (MEM2) and storing the data set only on certain storage means (MEM2).

7. Method according to Claim 1, a selection being made from a number of data sets by means of an input device (INOUT), and the selected data sets being stored on the same storage means (MEM2).

8. Vending machine (AUT) for the sale of data sets for telecommunication facilities, said vending machine being equipped with a payment facility (PAY), with a control facility (CONTR), with a usage restriction facility (RESTR) and with an interface facility (INTER1) for linking storage means (MEM2) which is developed such that it sends a release signal to the control facility (CONTR) if a suitable storage means (MEM2) has been linked with it in such a way that a data transfer is possible, the usage restriction facility (RESTR) being developed such that it causes a storage of data sets on the storage means (MEM2) with release of a stored data set to a predetermined extent only, data about this extent of use being recorded in the data set, and the control facility (CONTR) being developed such that it causes the sending of at least one data set for sale to the usage restriction facility (RESTR), if it receives a release signal from the payment facility (PAY) and the interface facility (INTER1), the desired scope of use being acquired by an input device, and the payment facility (PAY) calculating a sum of money to be paid according to the desired scope of use.

9. Vending machine (AUT) according to Claim 8,
the vending machine (AUT) being equipped with a communication facility (KOM) that is suitable for receipt of data sets over a broadband communication network (KN).

10. Sales system for telecommunication software, with a number of chip cards each equipped with storage means (MEM2), with a number of vending machines (AUT) for storing programs on the chip cards and with a number of telecommunication facilities each equipped with an interface facility for linking the chip cards and being developed such that they are controlled according to programs stored on a linked chip card, the vending machines (AUT) each being equipped with a payment facility (PAY), with a control facility (CONTR), with a usage restriction facility (RESTR) and with an interface facility (INTER1) for linking the chip cards which is developed such that it sends a release signal to the control facility (CONTR) if a suitable chip card has been linked with it in such a way that a data transfer is possible, the usage restriction facility (RESTR) being developed such that it causes a storage of data sets on the chip card with release of a stored data set to a predetermined extent only, in that it records data about this extent of use in the data set and the desired scope of use is acquired by an input device (INOUT) and the payment facility (PAY) calculates a sum of money to be paid according to the desired scope of use, and the control facility (CONTR) being developed such that it causes the sending of at least one data set for sale to the usage restriction facility (RESTR), if it receives a release signal from the payment facility (PAY) and the interface facility (INTER1).

## Revendications

1. Procédé pour la vente d'enregistrements pour les appareils de télécommunication au moyen d'un automate de vente (AUT), avec lequel on vérifie si un appareil de stockage (MEM2) approprié a été connecté avec un appareil d'interface (INTER1) de l'automate de vente (AUT) de telle sorte qu'une transmission de données est possible, on vérifie si un appareil de paiement (PAY) envoie un signal de validation à un appareil de commande (CONTR) et avec lequel, si ces deux conditions sont réunies, au moins un enregistrement à vendre est mémorisé sur l'appareil de stockage (MEM2), **caractérisé en ce que** l'enregistrement est mémorisé de telle sorte que l'enregistrement n'est validé que dans une proportion prédéfinie pour l'utilisation, des données concernant cette étendue d'utilisation étant mentionnées avant la mémorisation dans l'enregistrement par un appareil pour la restriction d'utilisation (RESTR) et l'étendue d'utilisation souhaitée étant enregistrée par un appareil d'entrée (INOUT), et **en ce que** l'appareil de paiement (PAY) calcule un montant d'argent à payer en fonction de l'étendue d'utilisation souhaitée.

2. Procédé selon la revendication 1,
la copie de l'enregistrement de l'appareil de stockage (MEM2) sur un autre dispositif de stockage étant empêchée.

3. Procédé selon la revendication 2,
sachant qu'il s'agit d'un programme en ce qui concerne l'enregistrement et que l'enregistrement est mémorisé sur l'appareil de stockage (MEM2) de telle sorte que l'appareil de stockage (MEM2) permet l'exécution du programme dans un appareil de télécommunication, mais pas une autre lecture de l'enregistrement.

4. Procédé selon la revendication 1,
des données sur l'identité de l'acheteur d'un enregistrement étant enregistrées par un appareil d'entrée (INOUT), ces données étant mentionnées lors du stockage dans l'enregistrement, et un appareil de télécommunication indiquant ou vérifiant ces données lors du traitement de l'enregistrement.

5. Procédé selon la revendication 1,
l'appareil de stockage (MEM2) vérifiant l'identité d'un appareil de télécommunication et permettant la lecture d'un enregistrement seulement pour certains appareils de télécommunication.

6. Procédé selon la revendication 1,
l'automate de vente (AUT) vérifiant l'identité de l'appareil de stockage (MEM2) et mémorisant l'enregistrement seulement sur certains appareils de stockage (MEM2).

7. Procédé selon la revendication 1,
une sélection parmi une pluralité d'enregistrements étant faite au moyen d'un appareil d'entrée (INOUT) et les enregistrements sélectionnés étant mémorisés sur le même appareil de stockage (MEM2).

8. Automate de vente (AUT) pour la vente d'enregistrements pour des appareils de télécommunication, qui est pourvu d'un appareil de paiement (PAY), d'un appareil de commande (CONTR), d'un appareil pour la restriction d'utilisation (RESTR) et d'un appareil d'interface (INTER1) pour la connexion d'appareils de stockage (MEM2), qui est conçu de telle sorte qu'il envoie un signal de validation à l'appareil de commande (CONTR), lorsqu'un appareil de stockage (MEM2) approprié a été connecté avec lui, de telle sorte qu'une transmission de données est possible, l'appareil pour la restriction d'utilisation (RESTR), étant conçu de telle sorte qu'il demande un stockage, autorisant un enregistrement mémorisé seulement dans une certaine proportion, d'enregistrements sur l'appareil de stockage (MEM2), les données concernant cette étendue d'utilisation étant mentionnées dans l'enregistrement et l'appareil de commande (CONTR) étant conçu de telle sorte qu'il demande l'envoi d'au moins un enregistrement à vendre à l'appareil pour la restriction d'utilisation (RESTR) lorsqu'il reçoit un signal de validation de l'appareil de paiement (PAY) et de l'appareil d'interface (INTER1), l'étendue d'utilisation mentionnée étant enregistrée par un appareil d'entrée (INOUT), et l'appareil de paiement (PAY) calculant une somme d'argent à payer en fonction de l'étendue d'utilisation souhaitée.

9. Automate de vente (AUT) selon la revendication 8,
l'automate de vente (AUT) étant équipé d'un appareil de communication (KOM) qui est approprié pour la réception d'enregistrements au moyen d'un réseau de communication à large bande (KN).

10. Système de vente pour logiciel de télécommunication, doté d'une pluralité de cartes à puce, qui sont pourvues chacune d'un appareil de stockage (MEM2), avec une pluralité d'automates de vente (AUT) pour la mémorisation de programmes sur les cartes à puce et d'une pluralité d'appareils de télécommunication, qui sont pourvus chacun d'un appareil d'interface pour la connexion des cartes à puce et sont conçus de telle sorte qu'ils sont commandés selon des programmes mémorisés sur une carte à puce connectée, les automates de vente (AUT) étant pourvus chacun d'un appareil de paiement (PAY), d'un appareil de commande (CONTR), d'un appareil pour la restriction d'utilisation (RESTR) et d'un appareil d'interface (INTER1) pour la connexion des cartes à puce, qui est conçu de telle sorte qu'il envoie un signal de validation à l'appareil de commande (CONTR) lorsqu'une carte à puce appropriée a été connectée avec lui de telle sorte qu'une transmission de données est possible, l'appareil pour la restriction d'utilisation (RESTR) étant conçu de telle sorte qu'il demande un stockage, libérant un enregistrement mémorisé seulement dans une proportion prédéfinie, d'enregistrements sur la carte à puce du fait qu'il mentionne des données sur cette étendue d'utilisation dans l'enregistrement et que l'étendue d'utilisation souhaitée est enregistrée par un appareil d'entrée (INOUT) et l'appareil de paiement (PAY) calcule un montant d'argent à payer en fonction de l'étendue d'utilisation souhaitée et l'appareil de commande (CONTR) est conçu de telle sorte qu'il demande l'envoi d'au moins un enregistrement à vendre à l'appareil pour la restriction d'utilisation (RESTR) lorsqu'il reçoit un signal de validation de l'appareil de paiement (PAY) et de l'appareil d'interface (INTER1).
